(19) 

Europäisches Patentamt

European Patent Office

Office européen des brevets

(11) **EP 3 792 328 A1**

(12) **EUROPEAN PATENT APPLICATION**
published in accordance with Art. 153(4) EPC

(43) Date of publication:
**17.03.2021 Bulletin 2021/11**

(21) Application number: **19799509.5**

(22) Date of filing: **12.04.2019**

(51) Int Cl.:
*C09K 3/18* (2006.01)          *C08F 220/22* (2006.01)
*C08F 220/54* (2006.01)      *D06M 15/244* (2006.01)
*D06M 15/277* (2006.01)

(86) International application number:
**PCT/JP2019/015926**

(87) International publication number:
**WO 2019/216117 (14.11.2019 Gazette 2019/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **11.05.2018 JP 2018092346**

(71) Applicant: DAIKIN INDUSTRIES, LTD.
**Osaka 530-8323 (JP)**

(72) Inventors:
• IOKI, Masato
**Osaka-shi, Osaka 530-8323 (JP)**

• MIYAHARA, Masahiro
**Osaka-shi, Osaka 530-8323 (JP)**
• UEHARA, Tetsuya
**Osaka-shi, Osaka 530-8323 (JP)**
• YAMAMOTO, Yuuki
**Osaka-shi, Osaka 530-8323 (JP)**
• FUKUMORI, Masaki
**Osaka-shi, Osaka 530-8323 (JP)**
• HIMURO, Masahiro
**Osaka-shi, Osaka 530-8323 (JP)**

(74) Representative: **Hoffmann Eitle
Patent- und Rechtsanwälte PartmbB
Arabellastraße 30
81925 München (DE)**

(54) **WATER AND OIL REPELLENT AND TEXTILE PRODUCT**

(57)     Provided is a water and oil repellent comprising: (a) a fluorine-containing monomer represented by the general formula $CH_2=C(-X)-C(=O)-Y-Z-Rf$ [where X is a hydrogen atom, a monovalent organic group, or a halogen atom, Y is -0- or -NH-, Z is a direct bond or a divalent organic group, and Rf is a fluoroalkyl group having 1-20 carbon atoms]; and (b) a fluorine-containing copolymer containing a repeating unit derived from nonyl(meth)acrylate. This water and oil repellent can sufficiently achieve both high processing stability and high alcohol repellency (more specifically, isopropyl alcohol-water mixture repellency).

EP 3 792 328 A1

## Description

Technical Field

The present disclosure relates to a water- and oil-repellent agent and a textile product obtained using the water- and oil-repellent agent.

Background Art

Conventionally, a fluorine-containing copolymer containing a repeating unit derived from a fluorine-containing monomer having a fluoroalkyl group has been used as an active component (or effective component) of a water- and oil-repellent agent because water- and oil-repellency is exhibited.

A water- and oil-repellent agent comprising such a fluorine-containing copolymer can be utilized, for example, for imparting water- and oil-repellency to a textile product. Among textile products, a medical nonwoven fabric product, for example, a medical gown, requires high alcohol-repellency, particularly liquid repellency to a mixed liquid of isopropyl alcohol and water (hereinafter also simply referred to as "liquid repellency to isopropyl alcohol/water") as a standard, in addition to water- and oil-repellency.

As a water- and oil-repellent agent used in such an application, a composition comprising a fluorine-containing copolymer having a constituent unit based on a fluorine-containing monomer having a polyfluoroalkyl group having 1 to 6 carbon atoms, a constituent unit based on a (meth)acrylate having no polyfluoroalkyl group and having an alkyl group having 1 to 6 carbon atoms, and a constituent unit based on a halogenated olefin is proposed (Patent Literature 1).

Citation List

Patent Literature

Patent Literature 1: International Publication No. WO 2012/020735
Patent Literature 2: Japanese Patent Laid-Open No. 2013-82886

Summary of Invention

Technical Problem

In order to impart water- and oil-repellency to a textile product, a water- and oil-repellent agent is also required to have high processing stability. Generally, a textile product having water- and oil-repellency can be obtained by immersing a fibrous substrate (cloth) such as a nonwoven fabric in a treatment liquid formulated by dispersing and diluting a water- and oil-repellent agent in an aqueous medium, then taking the fibrous substrate out of the treatment liquid, pressing the fibrous substrate by a roll (or between rolls) to remove the excess treatment liquid, and drying the fibrous substrate to keep the active component of the water- and oil-repellent agent into the fibrous substrate. Unless the processing stability of the water- and oil-repellent agent is sufficient, the emulsion particles can break, and the aggregation and sedimentation of the emulsion particles can occur, in such treatment due to a mechanical impact (or a shear force) when the fibrous substrate enters the treatment liquid, causing problems such as lumps of the polymer adhering to the roll to cause roll soil and adhering to the fibrous substrate to provide a fibrous substrate soil. Especially, the higher the tackiness of the polymer is, the more easily the lumps of the polymer adhere to the roll. When the number of carbon atoms of the fluoroalkyl group in the fluorine-containing copolymer is 6 or less, the melting point of the polymer decreases, and thus the tackiness tends to be higher than that of a fluorine-containing copolymer having a fluoroalkyl group having 8 or more carbon atoms (see Patent Literature 2).

However, conventional water- and oil-repellent agents cannot always sufficiently satisfy both of the demand for high processing stability and the demand for high alcohol-repellency.

An object of the present disclosure is to provide a water- and oil-repellent agent which can sufficiently attain both high processing stability and high alcohol-repellency (more specifically liquid repellency to isopropyl alcohol/water), and to provide a textile product obtained by using such a water- and oil-repellent agent.

Solution to Problem

The present disclosure provides the following embodiments:

[Embodiment 1]

A water- and oil-repellent agent comprising a fluorine-containing copolymer comprising repeating units derived from

(a) a fluorine-containing monomer represented by the general formula:

$$CH_2=C(-X)-C(=O)-Y-Z-Rf \qquad (1)$$

wherein X is a hydrogen atom, a monovalent organic group, or a halogen atom;
Y is -O- or -NH- ;
Z is a direct bond or a divalent organic group; and
Rf is a fluoroalkyl group having 1 to 20 carbon atoms, and

(b) nonyl (meth)acrylate.

[Embodiment 2]

The water- and oil-repellent agent according to embodiment 1, wherein in general formula (1), X is a hydrogen atom, a linear or branched alkyl group having 1 to 21 carbon atoms, a fluorine atom, a chlorine atom, a bromine atom, an iodine atom, a $CFX^1X^2$ group (wherein $X^1$ and $X^2$ are each a hydrogen atom, a fluorine atom, a chlorine atom, a bromine atom, or an iodine atom), a cyano group, a linear or branched fluoroalkyl group having 1 to 21 carbon atoms, a substituted or unsubstituted benzyl group, or a substituted or unsubstituted phenyl group.

[Embodiment 3]

The water- and oil-repellent agent according to embodiment 1 or 2, wherein in general formula (1), Z is a direct bond, an aliphatic group having 1 to 10 carbon atoms, an aromatic group or a cycloaliphatic group having 6 to 18 carbon atoms,
a -$CH_2CH_2N(R^1)SO_2$- group wherein $R^1$ is an alkyl group having 1 to 4 carbon atoms,
a -$CH_2CH(OZ^1)CH_2$- group wherein $Z^1$ is a hydrogen atom or an acetyl group, or
a -$(CH_2)_m$-$SO_2$-$(CH_2)_n$- group or a -$(CH_2)_m$-S-$(CH_2)_n$- group wherein m is 1 to 10, and n is 0 to 10.

[Embodiment 4]

The water- and oil-repellent agent according to any of embodiments 1 to 3, wherein in general formula (1), Rf is a fluoroalkyl group having 1 to 6 carbon atoms.

[Embodiment 5]

The water- and oil-repellent agent according to any of embodiments 1 to 4, wherein the nonyl (meth)acrylate (b) is isononyl (meth)acrylate.

[Embodiment 6]

The water- and oil-repellent agent according to any of embodiments 1 to 5, wherein the fluorine-containing copolymer further comprises at least one repeating unit derived from at least one selected from the group consisting of

(c) a fluorine-free non-crosslinkable monomer excluding the nonyl (meth)acrylate (b),
(d) a fluorine-free crosslinkable monomer, and
(e) a halogenated olefin monomer.

[Embodiment 7]

The water- and oil-repellent agent according to any of embodiments 1 to 6, which comprises a fluorine-containing composite polymer comprising:

a first polymer which is the fluorine-containing copolymer, and
a second polymer which is another polymer containing a repeating unit derived from (e) a halogenated olefin monomer.

[Embodiment 8]

The water- and oil-repellent agent according to embodiment 6 or 7, wherein the halogenated olefin monomer (e) is an olefin having 2 to 20 carbon atoms and substituted by 1 to 10 chlorine atoms, bromine atoms, or iodine atoms.

[Embodiment 9]

The water- and oil-repellent agent according to any of embodiments 6 to 8, wherein the halogenated olefin monomer (e) is vinyl chloride, vinyl bromide, vinyl iodide, vinylidene chloride, vinylidene bromide, or vinylidene iodide.

[Embodiment 10]

The water- and oil-repellent agent according to any of embodiments 1 to 9, which further comprises an aqueous medium.

[Embodiment 11]

The water- and oil-repellent agent according to any of embodiments 1 to 10, wherein
a proportion of the monomer (a) is 20 to 90% by mass,
a proportion of the monomer (b) is 0.1 to 70% by mass,
a proportion of the monomer (c) is 0.5 to 50% by mass,
a proportion of the monomer (d) is 0.5 to 50% by mass, and
a proportion of the monomer (e) is 0.5 to 50% by mass,
based on 100% by mass of the fluorine-containing copolymer or the fluorine-containing composite polymer, and
a concentration of the fluorine-containing copolymer or the fluorine-containing composite polymer in the water- and oil-repellent agent is 0.01 to 50% by mass.

[Embodiment 12]

A textile product comprising a fibrous substrate treated with the water- and oil-repellent agent according to any of embodiments 1 to 11.

[Embodiment 13]

The textile product according to embodiment 12, wherein the fibrous substrate is a nonwoven fabric.

Advantageous Effects of Invention

The present disclosure provides a water- and oil-repellent agent which can sufficiently attain both high processing stability and high alcohol-repellency (more specifically liquid repellency to isopropyl alcohol/water), and a textile product obtained by using such a water- and oil-repellent agent.

Description of Embodiments

A water- and oil-repellent agent in one embodiment of the present disclosure comprises a fluorine-containing copolymer (also referred to as a "first polymer" in the present disclosure) comprising repeating units derived from

(a) a fluorine-containing monomer represented by the general formula:

$$CH_2=C(-X)-C(=O)-Y-Z-Rf \qquad (1)$$

wherein X is a hydrogen atom, a monovalent organic group, or a halogen atom;
Y is -O- or -NH- ;

Z is a direct bond or a divalent organic group; and
Rf is a fluoroalkyl group having 1 to 20 carbon atoms, and

(b) nonyl (meth)acrylate.

In the fluorine-containing copolymer contained in the water- and oil-repellent agent, the repeating unit derived from the above-mentioned fluorine-containing monomer (a) can contribute to providing water- and oil-repellency (or water and oil resistance), and the repeating unit derived from the above-mentioned nonyl (meth)acrylate (b) can contribute to achieving both high processing stability and high alcohol-repellency, which do not limit the present disclosure. Use of the fluorine-containing monomer (a) and the nonyl (meth)acrylate (b) in combination to obtain a fluorine-containing copolymer is not disclosed in conventional water- and oil-repellent agents. We discovered that such a combination as in the present disclosure can surprisingly achieve both high processing stability and high alcohol-repellency in a water- and oil-repellent agent.

In the present disclosure, "processing stability" means the alteration of the components contained in the water- and oil-repellent agent when an object to be treated (for example, a substrate) is treated with the water- and oil-repellent agent, particularly the extent to which lumps of the polymer are generated by the action of a mechanical impact (or a shear force) that can be applied during the treatment. Generally, high "processing stability" means the generation of a small amount of lumps of the polymer, and low "processing stability" means the generation of many lumps of the polymer. "Alcohol-repellency" can be evaluated by using liquid repellency as an indicator to a mixed liquid of isopropyl alcohol and water (liquid repellency to isopropyl alcohol/water), and can be evaluated, for example, in accordance with AATCC Test Method 193.

The fluorine-containing copolymer may further contain at least one repeating unit derived from at least one selected from the group consisting of

(c) a fluorine-free non-crosslinkable monomer excluding the nonyl (meth)acrylate (b),
(d) a fluorine-free crosslinkable monomer, and
(e) a halogenated olefin monomer.

In the fluorine-containing copolymer contained in the water- and oil-repellent agent, the repeating units derived from the above-mentioned fluorine-free non-crosslinkable monomer (c), the above-mentioned fluorine-free crosslinkable monomer (d), and/or the above-mentioned halogenated olefin monomer (e) can contribute to improving a variety of properties such as water- and oil-repellency, alcohol-repellency (more specifically liquid repellency to isopropyl alcohol/water (evaluated, for example, in accordance with AATCC Test Method 193)), water pressure resistance (evaluated, for example, in accordance with AATCC Test Method 127), an antistatic property (more specifically surface electrical resistance (evaluated, for example, in accordance with AATCC Test Method 76)), an antifouling property, and the cleaning durability and washing durability of these properties, solubility in a solvent, hardness, and a feel as needed, which does not limit the present disclosure.

(a) Fluorine-Containing Monomer

The fluorine-containing monomer is a fluorine-containing monomer represented by the fluorine-containing monomer represented by the above-mentioned general formula (1).

In the fluorine-containing monomer (a), the atom at the $\alpha$-position (of the acrylate or the methacrylate) may be a hydrogen atom or be replaced by, for example, a halogen atom. Therefore, in formula (1), X may be a hydrogen atom, a linear or branched alkyl group having 1 to 21 carbon atoms, a fluorine atom, a chlorine atom, a bromine atom, an iodine atom, a $CFX^1X^2$ group (wherein $X^1$ and $X^2$ are each a hydrogen atom, a fluorine atom, a chlorine atom, a bromine atom, or an iodine atom), a cyano group, a linear or branched fluoroalkyl group having 1 to 21 carbon atoms, a substituted or unsubstituted benzyl group, or a substituted or unsubstituted phenyl group.

In the above-mentioned formula (1), for example, Z may be a direct bond or a divalent organic group. When Z is a divalent organic group, for example, Z may be an aliphatic group having 1 to 10 carbon atoms, an aromatic group or a cycloaliphatic group having 6 to 18 carbon atoms,
a $-CH_2CH_2N(R^1)SO_2-$ group wherein $R^1$ is an alkyl group having 1 to 4 carbon atoms,
a $-CH_2CH(OZ^1)CH_2-$ group wherein $Z^1$ is a hydrogen atom or an acetyl group, or
a $-(CH_2)_m-SO_2-(CH_2)_n-$ group or a $-(CH_2)_m-S-(CH_2)_n-$ group wherein m is 1 to 10, and n is 0 to 10.

In the above-mentioned formula (1), the Rf group is preferably a perfluoroalkyl group. The number of carbon atoms of the Rf group may be 1 to 12, for example, 1 to 6, particularly 4 to 6, and especially 6. From another viewpoint, the Rf group may be a (particularly linear or branched) fluoroalkyl group having 1 to 6 carbon atoms. Examples of the Rf group are $-CF_3$, $-CF_2CF_3$, $-CF_2CF_2CF_3$, $-CF(CF_3)_2$, $-CF_2CF_2CF_2CF_3$, $-CF_2CF(CF_3)_2$, $-C(CF_3)_3$, $-(CF_2)_4CF_3$, -

$(CF_2)_2CF(CF_3)_2$, $-CF_2C(CF_3)_3$, $-CF(CF_3)CF_2CF_2CF_3$, $-(CF_2)_5CF_3$, $-(CF_2)_3CF(CF_3)_2$, $-(CF_2)_4CF(CF_3)_2$, and $-C_8F_{17}$. Particularly $-(CF_2)_5CF_3$ is preferred.

Specific examples of the fluorine-containing monomer (a) can include, but are not limited to, the following:

$CH_2=C(-H)-C(=O)-O-(CH_2)_2-Rf$

$CH_2=C(-H)-C(=O)-O-C_6H_4-Rf$

$CH_2=C(-Cl)-C(=O)-O-(CH_2)_2-Rf$

$CH_2=C(-H)-C(=O)-O-(CH_2)_2N(-CH_3)SO_2-Rf$

$CH_2=C(-H)-C(=O)-O-(CH_2)_2N(-C_2H_5)SO_2-Rf$

$CH_2=C(-H)-C(=O)-O-CH_2CH(-OH)CH_2-Rf$

$CH_2=C(-H)-C(=O)-O-CH_2CH(-OCOCH_3)CH_2-Rf$

$CH_2=C(-H)-C(=O)-O-(CH_2)_2-S-Rf$

$CH_2=C(-H)-C(=O)-O-(CH_2)_2-S-(CH_2)_2-Rf$

$CH_2=C(-H)-C(=O)-O-(CH_2)_3-SO_2-Rf$

$CH_2=C(-H)-C(=O)-O-(CH_2)_2-SO_2-(CH_2)_2-Rf$

$CH_2=C(-H)-C(=O)-NH-(CH_2)_2-Rf$

$CH_2=C(-CH_3)-C(=O)-O-(CH_2)_2-Rf$

$CH_2=C(-CH_3)-C(=O)-O-(CH_2)_2-S-Rf$

$CH_2=C(-CH_3)-C(=O)-O-(CH_2)_2-S-(CH_2)_2-Rf$

$CH_2=C(-CH_3)-C(=O)-O-(CH_2)_3-SO_2-Rf$

$CH_2=C(-CH_3)-C(=O)-O-(CH_2)_2-SO_2-(CH_2)_2-Rf$

$CH_2=C(-CH_3)-C(=O)-NH-(CH_2)_2-Rf$

$CH_2=C(-F)-C(=O)-O-(CH_2)_2-S-Rf$

$CH_2=C(-F)-C(=O)-O-(CH_2)_2-S-(CH_2)_2-Rf$

$CH_2=C(-F)-C(=O)-O-(CH_2)_2-SO_2-Rf$

$CH_2=C(-F)-C(=O)-O-(CH_2)_2-SO_2-(CH_2)_2-Rf$

$CH_2=C(-F)-C(=O)-NH-(CH_2)_2-Rf$

$CH_2=C(-Cl)-C(=O)-O-(CH_2)_2-S-Rf$

$CH_2=C(-Cl)-C(=O)-O-(CH_2)_2-S-(CH_2)_2-Rf$

$CH_2=C(-Cl)-C(=O)-O-(CH_2)_2-SO_2-Rf$

$CH_2=C(-Cl)-C(=O)-O-(CH_2)_2-SO_2-(CH_2)_2-Rf$

$CH_2=C(-Cl)-C(=O)-NH-(CH_2)_2-Rf$

$CH_2=C(-CF_3)-C(=O)-O-(CH_2)_2-S-Rf$

$CH_2=C(-CF_3)-C(=O)-O-(CH_2)_2-S-(CH_2)_2-Rf$

$CH_2=C(-CF_3)-C(=O)-O-(CH_2)_2-SO_2-Rf$

$CH_2=C(-CF_3)-C(=O)-O-(CH_2)_2-SO_2-(CH_2)_2-Rf$

$CH_2=C(-CF_3)-C(=O)-NH-(CH_2)_2-Rf$

$CH_2=C(-CF_2H)-C(=O)-O-(CH_2)_2-S-Rf$

$CH_2=C(-CF_2H)-C(=O)-O-(CH_2)_2-S-(CH_2)_2-Rf$

$CH_2=C(-CF_2H)-C(=O)-O-(CH_2)_2-SO_2-Rf$

$CH_2=C(-CF_2H)-C(=O)-O-(CH_2)_2-SO_2-(CH_2)_2-Rf$

$CH_2=C(-CF_2H)-C(=O)-NH-(CH_2)_2-Rf$

$CH_2=C(-CN)-C(=O)-O-(CH_2)_2-S-Rf$

$CH_2=C(-CN)-C(=O)-O-(CH_2)_2-S-(CH_2)_2-Rf$

$CH_2=C(-CN)-C(=O)-O-(CH_2)_2-SO_2-Rf$

$CH_2=C(-CN)-C(=O)-O-(CH_2)_2-SO_2-(CH_2)_2-Rf$

$CH_2=C(-CN)-C(=O)-NH-(CH_2)_2-Rf$

$CH_2=C(-CF_2CF_3)-C(=O)-O-(CH_2)_2-S-Rf$

$CH_2=C(-CF_2CF_3)-C(=O)-O-(CH_2)_2-S-(CH_2)_2-Rf$

$CH_2=C(-CF_2CF_3)-C(=O)-O-(CH_2)_2-SO_2-Rf$

$CH_2=C(-CF_2CF_3)-C(=O)-O-(CH_2)_2-SO_2-(CH_2)_2-Rf$

$CH_2=C(-CF_2CF_3)-C(=O)-NH-(CH_2)_2-Rf$

$CH_2=C(-F)-C(=O)-O-(CH_2)_3-S-Rf$

$CH_2=C(-F)-C(=O)-O-(CH_2)_3-S-(CH_2)_2-Rf$

$CH_2=C(-F)-C(=O)-O-(CH_2)_3-SO_2-Rf$

$CH_2=C(-F)-C(=O)-O-(CH_2)_3-SO_2-(CH_2)_2-Rf$

$CH_2=C(-F)-C(=O)-NH-(CH_2)_3-Rf$

$CH_2=C(-Cl)-C(=O)-O-(CH_2)_3-S-Rf$

$CH_2=C(-Cl)-C(=O)-O-(CH_2)_3-S-(CH_2)_2-Rf$

$CH_2=C(-C1)-C(=O)-0-(CH_2)_3-SO_2-Rf$

$CH_2=C(-Cl)-C(=O)-O-(CH_2)_3-SO_2-(CH_2)_2-Rf$

$CH_2=C(-CF_3)-C(=O)-O-(CH_2)_3-S-Rf$

$CH_2=C(-CF_3)-C(=O)-O-(CH_2)_3-S-(CH_2)_2-Rf$

$CH_2=C(-CF_3)-C(=O)-O-(CH_2)_3-SO_2-Rf$

$CH_2=C(-CF_3)-C(=O)-O-(CH_2)_3-SO_2-(CH_2)_2-Rf$

$CH_2=C(-CF_2H)-C(=O)-O-(CH_2)_3-S-Rf$

$CH_2=C(-CF_2H)-C(=O)-O-(CH_2)_3-S-(CH_2)_2-Rf$

$CH_2=C(-CF_2H)-C(=O)-O-(CH_2)_3-SO_2-Rf$

$CH_2=C(-CF_2H)-C(=O)-O-(CH_2)_3-SO_2-(CH_2)_2-Rf$

$CH_2=C(-CN)-C(=O)-O-(CH_2)_3-S-Rf$

$CH_2=C(-CN)-C(=O)-O-(CH_2)_3-S-(CH_2)_2-Rf$

$CH_2=C(-CN) -C(=O)-O-(CH_2)_3-SO_2-Rf$

$CH_2=C(-CN) -C(=O)-O-(CH_2)_3-SO_2-(CH_2)_2-Rf$

$CH_2=C(-CF_2CF_3)-C(=O)-0- (CH_2)_3-S-Rf$

$CH_2=C(-CF_2CF_3)-C(=O)-O-(CH_2)_3-S-(CH_2)_2-Rf$

$CH_2=C(-CF_2CF_3)-C(=O)-O-(CH_2)_3-SO_2-Rf$

$CH_2=C(-CF_2CF_3)-C(=O)-O-(CH_2)_2-SO_2-(CH_2)_2-Rf$

wherein Rf is a fluoroalkyl group having 1 to 20 carbon atoms.

(b) Nonyl (Meth)acrylate

In the present disclosure, the term "nonyl (meth)acrylate" means a concept including "nonyl acrylate" and "nonyl methacrylate", and specifically, "nonyl (meth)acrylate" may be either one or both of these. In the present disclosure, other terms prefixed by "(meth)" should also be understood in the same manner as this.
The nonyl group in the nonyl (meth)acrylate may be a linear nonyl group or a branched nonyl group, particularly an isononyl group.
Isononyl (meth)acrylate can be preferably used as the nonyl (meth)acrylate because it is easily commercially available, but the nonyl (meth)acrylate is not limited to this.

(c) Fluorine-Free Non-Crosslinkable Monomer

The above-mentioned fluorine-containing copolymer may have a repeating unit derived from the fluorine-free non-crosslinkable monomer (c). The fluorine-free non-crosslinkable (c) is a monomer containing no fluorine atom and not crosslinkable (or having no crosslinkable functional group), excluding the nonyl (meth)acrylate (b). The fluorine-free non-crosslinkable monomer (c) is preferably a fluorine-free monomer having a carbon-carbon double bond. The fluorine-free non-crosslinkable monomer (c) is preferably a vinyl monomer containing no fluorine. The fluorine-free non-crosslinkable monomer (c) is generally a compound having one carbon-carbon double bond.
A preferred fluorine-free non-crosslinkable monomer (c) is represented by the general formula:

$CH_2=CA-T$       (2)

wherein A is a hydrogen atom, a methyl group, or a halogen atom other than a fluorine atom,
T is a hydrogen atom, a chain or cyclic hydrocarbon group having 1 to 30 carbon atoms, or a chain or cyclic organic group having 1 to 20 carbon atoms and having an ester bond.

Examples of the chain or cyclic hydrocarbon group having 1 to 30 carbon atoms are a linear or branched aliphatic hydrocarbon group having 1 to 30, for example, 1 to 20, carbon atoms, a cycloaliphatic group having 4 to 30, for example, 4 to 20, carbon atoms, an aromatic hydrocarbon group having 6 to 30, for example, 6 to 20, carbon atoms, and an aromatic aliphatic hydrocarbon group having 7 to 30, for example, 7 to 20, carbon atoms. In general formula (2), T may be one of a long chain hydrocarbon group and a saturated cyclic hydrocarbon group having 12 to 30 carbon atoms.

Examples of the chain or cyclic organic group having 1 to 20 carbon atoms and having an ester bond are -C(=O)-O-Q and -O-C(=O)-Q wherein Q is a linear or branched aliphatic hydrocarbon group having 1 to 20 carbon atoms, a cycloaliphatic group having 4 to 20 carbon atoms, an aromatic hydrocarbon group having 6 to 20 carbon atoms, and an aromatic aliphatic hydrocarbon group having 7 to 20 carbon atoms.

Preferred examples of the fluorine-free non-crosslinkable monomer (c) include ethylene, vinyl acetate, acrylonitrile, styrene, polyethylene glycol (meth)acrylate, polypropylene glycol (meth)acrylate, methoxypolyethylene glycol (meth)acrylate, methoxypolypropylene glycol (meth)acrylate, and a vinyl alkyl ether. The fluorine-free non-crosslinkable monomer (c) is not limited to these examples.

The fluorine-free non-crosslinkable monomer (c) may be a (meth)acrylate ester having an alkyl group. The number of carbon atoms of the alkyl group may be 1 to 30, for example, 6 to 30(for example, 10 to 30). For example, the fluorine-free non-crosslinkable monomer (c) may be an acrylate represented by the general formula:

$$CH_2=CA^1COOA^2 \qquad (3)$$

wherein $A^1$ is a hydrogen atom, a methyl group, or a halogen atom other than a fluorine atom (for example, a chlorine atom, a bromine atom, and an iodine atom), and $A^2$ is an alkyl group represented by $C_nH_{2n+1}$(n = 1 to 30).

For example, the fluorine-free non-crosslinkable monomer (c) may be a (meth)acrylate monomer having a cyclic hydrocarbon group. The (meth)acrylate monomer (B) having a cyclic hydrocarbon group is a compound having a (preferably monovalent) cyclic hydrocarbon group and a monovalent (meth)acrylate group. The monovalent cyclic hydrocarbon group and the monovalent (meth)acrylate group are directly bonded to each other. Examples of the cyclic hydrocarbon group include a monocyclic group, a polycyclic group, and a bridged ring group that are saturated or unsaturated. The cyclic hydrocarbon group is preferably saturated. The number of carbon atoms of the cyclic hydrocarbon group is preferably 4 to 20. Examples of the cyclic hydrocarbon group include a cycloaliphatic group having 4 to 20, particularly 5 to 12, carbon atoms, an aromatic group having 6 to 20 carbon atoms, and an aromatic aliphatic group having 7 to 20 carbon atoms. The number of carbon atoms of the cyclic hydrocarbon group is particularly preferably 15 or less, for example, 10 or less. A carbon atom in the ring of the cyclic hydrocarbon group is preferably directly bonded to the ester group in the (meth)acrylate group. The cyclic hydrocarbon group is preferably a saturated cycloaliphatic group. Specific examples of the cyclic hydrocarbon group are a cyclohexyl group, a t-butylcyclohexyl group, an isobornyl group, a dicyclopentanyl group, and a dicyclopentenyl group. The (meth)acrylate group is an acrylate group or a methacrylate group, but a methacrylate group is preferred. Specific examples of the monomer having a cyclic hydrocarbon group include cyclohexyl methacrylate, t-butylcyclohexyl methacrylate, benzyl methacrylate, isobornyl methacrylate, isobornyl acrylate, dicyclopentanyl methacrylate, dicyclopentanyl acrylate, and dicyclopentenyl acrylate.

(d) Fluorine-Free Crosslinkable Monomer

The fluorine-containing copolymer of the present disclosure may have a repeating unit derived from the fluorine-free crosslinkable monomer (d). The fluorine-free crosslinkable monomer (d) is a monomer containing no fluorine atom and crosslinkable. The fluorine-free crosslinkable monomer (d) may be a compound having at least two reactive groups and/or carbon-carbon double bonds and containing no fluorine. The fluorine-free crosslinkable monomer (d) may be a compound having at least two carbon-carbon double bonds, or a compound having at least one carbon-carbon double bond and at least one reactive group. Examples of the reactive group include a hydroxyl group, an epoxy group, a chloromethyl group, a block isocyanate group, an amino group, and a carboxyl group. The fluorine-free crosslinkable monomer (d) may be a mono(meth)acrylate, a (meth)diacrylate, or mono(meth)acrylamide having a reactive group. Alternatively, the fluorine-free crosslinkable monomer (d) may be a di(meth)acrylate.

Examples of the fluorine-free crosslinkable monomer (d) include, but are not limited to, diacetone (meth)acrylamide, (meth)acrylamide, N-methylol(meth)acrylamide, hydroxymethyl (meth)acrylate, hydroxyethyl (meth)acrylate, 3-chloro-2-hydroxypropyl (meth)acrylate, 2-acetoacetoxyethyl (meth)acrylate, butadiene, isoprene, chloroprene, glycidyl (meth)acrylate, 1,6-hexanediol di(meth)acrylate, and neopentyl glycol di(meth)acrylate.

(e) Halogenated Olefin Monomer

The above-mentioned fluorine-containing copolymer may or may not contain a repeating unit derived from the halogenated olefin monomer (e) described later.

The above-mentioned fluorine-containing copolymer can be formed from a first monomer raw material, and the first monomer raw material comprises the above-mentioned monomers (a) and (b) and optionally includes at least any one selected from the group consisting of (c), (d), and (e). Regarding the fluorine-containing copolymer, for example, each of the monomers (a) and (b), and (c), (d), and (e) when present (more specifically the repeating units derived from these monomers, the same applies below) may be a single kind of monomer or a mixture of two or more.

The proportion of the monomer (a) may be 0.1 to 99.9% by mass, for example, 20 to 90% by mass, particularly 50 to 80% by mass, based on the fluorine-containing copolymer.

As an example of the mass proportions of each of the monomers in the fluorine-containing copolymer, the proportion of the monomer (a) may be 0.1 to 99.9% by mass, for example, 20 to 90% by mass, particularly 50 to 80% by mass,

the proportion of the monomer (b) may be 0.1 to 70% by mass, for example, 0.5 to 10% by mass, particularly 1 to 3% by mass,

the proportion of the monomer (c) may be 0 to 99.8% by mass, for example, 0.5 to 50% by mass, particularly 1 to 30% by mass,

the proportion of the monomer (d) may be 0 to 99.8% by mass, for example, 0.5 to 50% by mass, particularly 1 to 30% by mass, and

the proportion of the monomer (e) may be 0 to 99.8% by mass, for example, 0.5 to 50% by mass, particularly 1 to 30% by mass,

based on 100% by mass of the total of the monomers (a) to (e) (or the fluorine-containing copolymer).

These mass proportions may be considered equal to each of the mass proportions in the total of the monomers used for the raw materials of the fluorine-containing copolymer (first monomer raw material).

In the present disclosure, the molecular weight of the fluorine-containing copolymer is not limited, and the mass-average molecular weight obtained in terms of polystyrene by gel permeation chromatography is, for example, 3,000 or more, preferably in the range of 5,000 to 1,500,000.

A water- and oil-repellent agent in another embodiment of the present disclosure may contain a fluorine-containing polymer comprising the above-mentioned fluorine-containing copolymer (first polymer), and another polymer containing a repeating unit derived from (e) a halogenated olefin monomer(also referred to as a "second polymer" in the present disclosure)

(the fluorine-containing polymer is also simply referred to as a "fluorine-containing composite polymer" in the present disclosure only for the purpose of distinguishing it from the above-mentioned fluorine-containing copolymer).

A "fluorine-containing polymer" means the fluorine-containing copolymer (first polymer) and the fluorine-containing composite polymer. In other words, a "fluorine-containing polymer" means polymers obtained both when polymerization is not performed after the production of the fluorine-containing copolymer (first polymer) and when polymerization is performed after the production of the first polymer.

The fact that in addition to the fluorine-containing copolymer (first polymer), such another polymer (second polymer) is present in the fluorine-containing composite polymer contained in the water- and oil-repellent agent can contribute to achieving even higher processing stability, which does not limit the present disclosure.

(e) Halogenated Olefin Monomer

The halogenated olefin monomer (e) is preferably an olefin having 2 to 20 carbon atoms and substituted by 1 to 10 chlorine atoms, bromine atoms, or iodine atoms. The halogenated olefin monomer (e) is preferably a chlorinated olefin having 2 to 20 carbon atoms, particularly an olefin having 2 to 5 carbon atoms and having 1 to 5 chlorine atoms. Preferred specific examples of the halogenated olefin monomer (b) include vinyl halides such as vinyl chloride, vinyl bromide, and vinyl iodide, and vinylidene halides such as vinylidene chloride, vinylidene bromide, and vinylidene iodide.

The above-mentioned other polymer may or may not contain at least one repeating unit derived from at least one selected from the group consisting of the above-mentioned fluorine-containing monomer (a), nonyl (meth)acrylate (b), fluorine-free non-crosslinkable monomer (c), and fluorine-free crosslinkable monomer (d) as long as it is different from the above-mentioned fluorine-containing copolymer.

The above-mentioned other polymer can be formed from a second monomer raw material, and the second monomer raw material comprises the above-mentioned monomer (e) and optionally includes at least any one selected from the group consisting of (a), (b), (c), and (d). Regarding the other polymer, each of the monomer (e) and the monomer (a), (b), (c), and (d) when present (more specifically the repeating units derived from these monomers) may be a single kind of monomer or a mixture of two or more.

Preferably, the fluorine-containing copolymer (first polymer) is formed from the above-mentioned first monomer raw material comprising the fluorine-containing monomer (a) and the nonyl (meth)acrylate (b), and other polymer (second polymer) is formed by polymerizing the second monomer raw material comprising the halogenated olefin monomer (e) in the presence of the fluorine-containing copolymer. Thus the above-mentioned fluorine-containing composite polymer can be obtained.

In this case, the first polymer and the second polymer may together form a copolymer. In other words, the first polymer and the second polymer may be chemically bonded to each other. Alternatively, the first polymer and the second polymer may be physically bonded to each other without forming a chemical bond. An example of the physical bond is a core/shell structure in which the first polymer forms and the second polymer form a core and a shell, respectively. In the core/shell structure, the first polymer and the second polymer may not be chemically bonded to each other but may be chemically bonded to each other.

In the case where the water- and oil-repellent agent contains the fluorine-containing composite polymer comprising the fluorine-containing copolymer (first polymer) and other polymer (second polymer), as an example of the mass proportions of each of the monomers in the fluorine-containing composite polymer,

the proportion of the monomer (a) may be 0.1 to 99.8% by mass, for example, 20 to 90% by mass, particularly 50 to 80% by mass,

the proportion of the monomer (b) may be 0.1 to 70% by mass, for example, 0.5 to 10% by mass, particularly 1 to 3% by mass,

the proportion of the monomer (c) may be 0 to 99.7% by mass, for example, 0.5 to 50% by mass, particularly 1 to 30% by mass,

the proportion of the monomer (d) may be 0 to 99.7% by mass, for example, 0.5 to 50% by mass, particularly 1 to 30% by mass, and

the proportion of the monomer (e) may be 0.1 to 99.8% by mass, for example, 0.5 to 50% by mass, particularly 1 to 30% by mass,

based on 100% by mass of the total of the monomers (a) to (e) (or the fluorine-containing composite polymer).

These mass proportions may be considered equal to each of the mass proportions in the total of the monomers used for the raw materials of the first polymer and the second polymer (the first monomer raw material and the second monomer raw material). The same type of monomer (for example, the halogenated olefin monomer and the fluorine-containing monomer) may be contained in both the first monomer raw material and the second monomer raw material. The mass ratio between the same type of monomer (particularly the halogenated olefin monomer) in the first monomer raw material and the same type of monomer (particularly the halogenated olefin monomer) in the second monomer raw material may be 0 to 100:100 to 0, for example, 5 to 90:95 to 10, particularly 10 to 70:90 to 30.

When the water- and oil-repellent agent contains the fluorine-containing composite polymer comprising the fluorine-containing copolymer (first polymer) and other polymer (second polymer), the following description can apply.

Of the first monomer raw material and the second monomer raw material, at least the first monomer raw material comprises the fluorine-containing monomer (a) and the nonyl (meth)acrylate (b). The second monomer raw material preferably does not include the fluorine-containing monomer (a). The second monomer raw material may or may not include the nonyl (meth)acrylate (b).

The first monomer raw material may comprise the fluorine-free non-crosslinkable monomer (c). The second monomer raw material preferably does not include the fluorine-free non-crosslinkable monomer (c) (other than the halogenated olefin monomer (e)). When the second monomer raw material does not include the fluorine-free non-crosslinkable monomer (c), the property of preventing roll soil due to the adhesion of the polymer to a roll is excellent when a substrate is treated using the water-and oil-repellent agent.

At least one of the first monomer raw material and the second monomer raw material may comprise the fluorine-free crosslinkable monomer (d). The second monomer raw material may comprise the fluorine-free crosslinkable monomer (d). For example, the first monomer raw material may not include the fluorine-free crosslinkable monomer (d), and the second monomer raw material may comprise the fluorine-free crosslinkable monomer (d). Alternatively, the first monomer raw material may comprise the fluorine-free crosslinkable monomer (d), and the second monomer raw material may not include the fluorine-free crosslinkable monomer (d).

The second monomer raw material comprises the halogenated olefin monomer (e). The second monomer raw material may comprise only the halogenated olefin monomer (e). The first monomer raw material may or may not include the halogenated olefin monomer (e). The halogenated olefin monomer (e) may be present in both the first monomer raw material and the second monomer raw material.

Preferred examples of the monomers in the first monomer raw material and the second monomer raw material include the combinations shown in Table 1.

[Table 1]

| Example | First monomer raw material | Second monomer raw material |
|---|---|---|
| 1 | Fluorine-containing monomer, Nonyl (meth)acrylate | Halogenated olefin monomer |
| 2 | Fluorine-containing monomer, Nonyl (meth)acrylate, Fluorine-free non-crosslinkable monomer | Halogenated olefin monomer |
| 3 | Fluorine-containing monomer, Nonyl (meth)acrylate | Halogenated olefin monomer, Fluorine-free crosslinkable monomer |
| 4 | Fluorine-containing monomer, Nonyl (meth)acrylate, Fluorine-free non-crosslinkable monomer | Halogenated olefin monomer, Fluorine-free crosslinkable monomer |
| 5 | Fluorine-containing monomer, Nonyl (meth)acrylate, Fluorine-free non-crosslinkable monomer, Fluorine-free crosslinkable monomer | Halogenated olefin monomer |
| 6 | Fluorine-containing monomer, Nonyl (meth)acrylate, Fluorine-free non-crosslinkable monomer, Halogenated olefin monomer | Halogenated olefin monomer |
| 7 | Fluorine-containing monomer, Nonyl (meth)acrylate, Fluorine-free non-crosslinkable monomer, Fluorine-free crosslinkable monomer, Halogenated olefin monomer | Halogenated olefin monomer |

Among them, example 2 is particularly preferred. Embodiments in which the fluorine-free crosslinkable monomer is present in both the first monomer raw material and the second monomer raw material are also preferred. In other words, embodiments which are the same as examples 1 to 7 except that the fluorine-free crosslinkable monomer is present in both the first monomer raw material and the second monomer raw material are also preferred.

When the water- and oil-repellent agent contains the fluorine-containing composite polymer comprising the fluorine-containing copolymer (first polymer) and other polymer (second polymer), the molecular weight of the fluorine-containing composite polymer is not limited, and the mass-average molecular weight of the fluorine-containing composite polymer obtained in terms of polystyrene by gel permeation chromatography is, for example, 3,000 or more, preferably in the range of 5,000 to 1,500,000.

The fluorine-containing copolymer and the fluorine-containing composite polymer in the present disclosure can be produced by any of the usual polymerization methods, and the conditions of the polymerization reaction can also be arbitrarily selected. Examples of such polymerization methods include solution polymerization, suspension polymerization, and emulsion polymerization.

In solution polymerization, a method is adopted in which monomers are dissolved in an organic solvent in the presence of a polymerization initiator, and after nitrogen purge, the solution is heated and stirred in the range of 30 to 120°C for 1 to 10 h. Examples of the polymerization initiator include azobisisobutyronitrile, benzoyl peroxide, di-t-butyl peroxide, lauryl peroxide, cumene hydroperoxide, t-butyl peroxypivalate, and diisopropyl peroxydicarbonate. The polymerization initiator is used in the range of 0.01 to 20 parts by mass, for example, 0.01 to 10 parts by mass, based on 100 parts by mass of the monomers.

The organic solvent is inert to the monomers and dissolves these, and examples thereof include acetone, chloroform, HCHC225, isopropyl alcohol, pentane, hexane, heptane, octane, cyclohexane, benzene, toluene, xylene, petroleum ether, tetrahydrofuran, 1,4-dioxane, methyl ethyl ketone, methyl isobutyl ketone, ethyl acetate, butyl acetate, 1,1,2,2-tetrachloroethane, 1,1,1-trichloroethane, trichloroethylene, perchloroethylene, tetrachlorodifluoroethane, and trichlorotrifluoroethane. The organic solvent is used in the range of 50 to 2,000 parts by mass, for example, 50 to 1,000 parts by mass, based on 100 parts by mass of the total of the monomers.

In emulsion polymerization, a method is adopted in which monomers are emulsified in water in the presence of a polymerization initiator and an emulsifier, and after nitrogen purge, the emulsion is stirred in the range of 50 to 80°C for 1 to 10 hours for copolymerization. The polymerization initiator is a water-soluble one such as benzoyl peroxide, lauroyl peroxide, t-butyl perbenzoate, 1-hydroxycyclohexyl hydroperoxide, 3-carboxypropionyl peroxide, acetyl peroxide, azobisisobutylamidine-dihydrochloride, azobisisobutyronitrile, sodium peroxide, potassium persulfate, ammonium persulfate, 2,2'-azobis(2-methylpropionamidine) dihydrochloride, or 2,2'-azobis[2-(2-imidazol-2-yl)propane] dihydrochloride, or an oil-soluble one such as azobisisobutyronitrile, benzoyl peroxide, di-t-butyl peroxide, lauryl peroxide, cumene hydroperoxide, t-butyl peroxypivalate, diisopropyl peroxydicarbonate, or 2,2'-azobis[2-(2-imidazol-2-yl)propane]. The polymerization initiator is used in the range of 0.01 to 10 parts by mass based on 100 parts by mass of the monomers.

In order to obtain a polymer water dispersion having excellent standing stability, monomers are desirably atomized in water using an emulsifying apparatus that can provide strong crushing energy, such as a high pressure homogenizer or an ultrasonic homogenizer, and polymerized by using an oil-soluble polymerization initiator. The emulsifier can be one of various types of anionic, cationic, or nonionic emulsifiers and is used in the range of 0.5 to 20 parts by mass based on 100 parts by mass of the monomers. The use of anionic and/or nonionic and/or cationic emulsifiers is preferred. When the monomers are not completely compatibilized, such a compatibilizer as to sufficiently compatibilize these monomers, for example, a water-soluble organic solvent or a low molecular weight monomer, is preferably added. The addition of a compatibilizer can improve emulsifiability and copolymerizability.

Examples of the water-soluble organic solvent include acetone, methyl ethyl ketone, ethyl acetate, propylene glycol, dipropylene glycol monomethyl ether, dipropylene glycol, tripropylene glycol, and ethanol, and the water-soluble organic solvent may be used in the range of 1 to 50 parts by mass, for example, 10 to 40 parts by mass, based on 100 parts by mass of water. Examples of the low molecular weight monomer include methyl methacrylate, glycidyl methacrylate, and 2,2,2-trifluoroethyl methacrylate, and the low molecular weight monomer may be used in the range of 1 to 50 parts by mass, for example, 10 to 40 parts by mass, based on 100 parts by mass of the total amount of the monomers.

A method for producing a water- and oil-repellent agent comprising a fluorine-containing copolymer in one embodiment of the present disclosure comprises:
(I) polymerizing a first monomer raw material to obtain a fluorine-containing copolymer, wherein the first monomer raw material comprises a fluorine-containing monomer (a) and nonyl (meth)acrylate (b) and optionally further includes at least one selected from the group consisting of a fluorine-free non-crosslinkable monomer (c), a fluorine-free crosslinkable monomer (d), and a halogenated olefin monomer (e).

In this embodiment, the first monomer raw material may be fed at once (one time) or continuously. The first monomer raw material is preferably fed at one time.

A method for producing a water- and oil-repellent agent comprising a fluorine-containing composite polymer (that is, a fluorine-containing polymer comprising a fluorine-containing copolymer and another polymer) in another embodiment of the present disclosure comprises:

(I) polymerizing a first monomer raw material to obtain a fluorine-containing copolymer as a first polymer, and
(II) polymerizing a second monomer raw material in the presence of the fluorine-containing copolymer to obtain another polymer as a second polymer,

wherein the first monomer raw material comprises a fluorine-containing monomer (a) and nonyl (meth)acrylate (b) and can optionally further include at least one selected from the group consisting of a fluorine-free non-crosslinkable monomer (c), a fluorine-free crosslinkable monomer (d), and a halogenated olefin monomer (e), and the second monomer raw material comprises the halogenated olefin monomer (e) and can optionally include at least any one selected from the group consisting of the fluorine-containing monomer (a), the nonyl (meth)acrylate (b), the fluorine-free non-crosslinkable monomer (c), and the fluorine-free crosslinkable monomer (d).

In this embodiment, for example, a polymerization reaction is performed with a liquid comprising the first monomer raw material to form the first polymer, and then a polymer reaction is performed with a liquid comprising the first polymer and the second monomer raw material to form the second polymer to obtain a fluorine-containing composite polymer composed of the first polymer and the second polymer. The polymerization of the second polymer may be initiated during the polymerization of the first polymer, or the polymerization of the second polymer may be initiated after the completion of the polymerization of the first polymer. The polymerization of the second polymer may be initiated after 10% or more (that is, 10 to 100%), for example, 40% or more (that is, 40 to 100%), particularly 70% or more (that is, 70 to 100%), of the polymerization reaction of the first polymer (that is, the polymerization reaction of the first monomer raw material) completes. "The proportion % of the completion of the polymerization reaction" (that is, the proportion % of the progress of the polymerization reaction) means the amount of the reacted monomers (polymerized monomers) in mol %. For example, when 10% of the polymerization reaction has completed, the amount in mol % of the polymerized monomers is 10 mol %, and the amount in mol % of the unreacted (unpolymerized) monomers is 90 mol %. When the first monomer raw material is a combination of at least two monomers, the amount in mol % of the first monomer raw material is based on the total moles of the at least two kinds of monomer in the first monomer raw material.

"During the polymerization of the first polymer" means that the polymerization reaction of the first polymer (that is, the polymerization reaction of the first monomer raw material) has not completely ended. For example, the polymerization of the second polymer may be initiated after 10% or more to less than 40%, 40% or more to less than 70%, or 70% or more to less than 100% (particularly 80% to 99%, especially 85% to 98%) of the polymerization of the first polymer completes.

"After the completion of the polymerization of the first polymer" means that about 100% of the polymerization reaction of the first polymer (that is, the polymerization reaction of the first monomer raw material) has completed.

When the polymerization of the second polymer is initiated during the polymerization of the first polymer, the second polymer has repeating units derived from the first monomer raw material and the second monomer raw material. When the polymerization of the second polymer is initiated after the completion of the polymerization of the first polymer, the second polymer has a repeating unit derived from only the second monomer raw material.

In this embodiment, the first monomer raw material may be fed at once (one time) or continuously. The first monomer raw material is preferably fed at one time.

The second monomer raw material may be fed at once or continuously. When at least one monomer in the second monomer raw material is gaseous, the second monomer raw material is preferably continuously fed so that the pressure of the monomer gas is constant during the polymerization of the second monomer raw material.

In the fluorine-containing composite polymer of the present disclosure, the first polymer is or is not chemically bonded to the second polymer.

At the point in time when the polymerization of the second monomer raw material is initiated, the unreacted fluorine-free non-crosslinkable monomer (c) is preferably substantially absent in the polymerization system. "Substantially absent" means that at the point in time when the polymerization of the second monomer raw material is initiated, the amount of the unreacted fluorine-free non-crosslinkable monomer (c) is 10 mol % or less, preferably 6 mol % or less, particularly 2 mol %, and especially 1 mol % or less based on the fed fluorine-free non-crosslinkable monomer (c). When the fluorine-free non-crosslinkable monomer is substantially absent, the property of preventing roll soil due to the adhesion of the polymer to a roll is excellent in processing treatment with a treatment agent comprising the fluorine-containing composite polymer.

Both the fluorine-containing copolymer and the fluorine-containing composite polymer in the present disclosure are preferably formed by emulsion polymerization. In the case of the fluorine-containing composite polymer, the second polymer may surround the first polymer in the particles of the aqueous dispersion formed of the first polymer and the second polymer, and the fluorine-containing composite polymer may have a core/shell structure in which the core of the first polymer is surrounded by the shell of the second polymer.

The water- and oil-repellent agent in the present disclosure is preferably in the form of a dispersion, a solution, an emulsion, or an aerosol. The water- and oil-repellent agent can comprise a medium (particularly a liquid medium, for example, an organic solvent and/or water) in addition to the fluorine-containing copolymer and/or the fluorine-containing composite polymer (the active component of the water- and oil-repellent agent, hereinafter simply described as "fluorine-containing copolymer/fluorine-containing composite polymer"). In the water- and oil-repellent agent, for example, the concentration of fluorine-containing copolymer/fluorine-containing composite polymer may be, for example, 0.01 to 50% by mass.

The water- and oil-repellent agent of the present disclosure preferably further comprises an aqueous medium in addition to fluorine-containing copolymer/fluorine-containing composite polymer. As used herein, an "aqueous medium" means a medium comprising only water, and a medium also containing an organic solvent in addition to water (the amount of the organic solvent is 80 parts by mass or less, for example, 0.1 to 50 parts by mass, particularly 5 to 30 parts by mass, based on 100 parts by mass of water). The water- and oil-repellent agent containing fluorine-containing copolymer/fluorine-containing composite polymer preferably forms a dispersion of fluorine-containing copolymer/fluorine-containing composite polymer by emulsion polymerization. The water- and oil-repellent agent is preferably an aqueous dispersion, more specifically an aqueous dispersion in which particles of fluorine-containing copolymer/fluorine-containing composite polymer are dispersed in an aqueous medium. In the dispersion, the average particle size of fluorine-containing copolymer/fluorine-containing composite polymer is preferably 0.01 to 200 $\mu$m, for example, 0.1 to 5 $\mu$m, particularly 0.05 to 0.2 $\mu$m. The average particle size can be measured by a dynamic light scattering apparatus, an electron microscope, or the like.

The water- and oil-repellent agent in the present disclosure can be applied to an object to be treated, by any suitable method, and, for example, a substrate can be treated with the water- and oil-repellent agent. In other words, a method for treating a substrate, comprising treating a substrate with the water- and oil-repellent agent is provided. In the present disclosure, "treatment" means applying the water- and oil-repellent agent or a treatment agent comprising this to an object to be treated (substrate) by, for example, immersion, spraying, or coating. Fluorine-containing copolymer/fluorine-containing composite polymer, which is the active component of the treatment agent, penetrates into the interior of the object to be treated and/or adheres to the surface of the object to be treated, by the treatment. The treatment method of the present disclosure can generally make an object to be treated water- and oil-repellent (or water-repellent/hydrophobic and oil-repellent/oleophobic) and alcohol-repellent.

Typically, a method can be adopted which includes dispersing and diluting the water- and oil-repellent agent in an organic solvent or water to form a treatment liquid, adhering the resultant to an object to be treated by a known method such as immersion coating, spray coating, or foam coating, and dried. If necessary, the water- and oil-repellent agent may be applied to an object to be treated, together with an appropriate crosslinking agent and cured. Further, the water- and oil-repellent agent of the present disclosure can also be used in combination with, for example, an insect repellent, a softening agent, an antibacterial agent, a flame retarder, an antistatic agent, a coating material fixative, and a wrinkle-resistant agent. The concentration of fluorine-containing copolymer/fluorine-containing composite polymer in the treatment liquid when bringing the treatment liquid into contact with an object to be treated may be 0.01 to 10% by mass (particularly in the case of immersion coating), for example, 0.05 to 10% by mass.

The object (substrate) to be treated with the water-and oil-repellent agent of the present disclosure is preferably a fibrous substrate. A textile product can be obtained by treating a fibrous substrate with the water-and oil-repellent agent. The thus obtained textile product can exhibit high processing stability and high alcohol-repellency. Such a textile product can exhibit extremely high alcohol-repellency, for example, a liquid repellency to isopropyl alcohol/water of grade 7 or more, preferably grade 8 or more, in the evaluation of liquid repellency to isopropyl alcohol/water in accordance with AATCC Test Method 193 though depending on the material of the fibrous substrate and the treatment conditions.

When the object to be treated is a fibrous substrate, the water- and oil-repellent agent in the present disclosure can be applied to the fibrous substrate by using it in a treatment liquid, according to any suitable method for treating a fibrous substrate with a liquid. For example, the concentration of fluorine-containing copolymer/fluorine-containing composite polymer in the treatment liquid applied to the fibrous substrate may be, for example, 0.5% by mass to 20% by mass, or 1% by mass to 5% by mass. The treated fibrous substrate is dried, preferably, for example, heated at 100°C to 200°C, for providing water- and oil-repellency and alcohol-repellency.

The fibrous substrate can be in any form such as a fiber, a thread, or a fabric and can typically be a fabric, as described later. Typically, a textile product with water- and oil-repellency and alcohol-repellency can be obtained by immersing a fibrous substrate in a treatment liquid formulated by dispersing and diluting the water- and oil-repellent agent in an aqueous medium, then taking the fibrous substrate (for example, a fabric) out of the treatment liquid, pressing the fibrous substrate by a roll or the like (for example, between rolls) to remove the excess treatment liquid, and drying the fibrous substrate to leave the active component of the water- and oil-repellent agent in the fibrous substrate. The water- and oil-repellent agent of the present disclosure has high processing stability, and even if a mechanical impact (or a shear force) is applied to the treatment liquid by the entry of the fibrous substrate into the treatment liquid in such treatment, the emulsion particles can be stably maintained, which can effectively prevent lumps of the polymer (fluorine-containing copolymer/fluorine-containing composite polymer) from adhering to the roll or the like and adhering to the fibrous substrate. Such an effect is particularly significant when the number of carbon atoms of the fluoroalkyl group of the fluorine-containing copolymer is 6 or less.

Alternatively, the water- and oil-repellent agent may be applied to the fibrous substrate by a cleaning method and, for example, may be applied to the fibrous substrate in washing application or a dry cleaning method.

The fibrous substrate is typically in the form of a fabric (which can also be referred to as a cloth), and this includes a woven fabric, a knitted fabric, and a nonwoven fabric (for example, a medical nonwoven fabric), a fabric in the form of clothing, and a carpet. The fibrous substrate may be in another form, for example, a fiber, a thread, or an intermediate textile product (for example, a sliver or a roving).

The material of the fibrous substrate can include a variety of examples, and for example, the material of the fibrous substrate may be any fiber material including a natural fiber and a chemical fiber. The natural fiber includes a vegetable fiber such as cotton and linen, an animal fiber such as wool and silk, and a mineral fiber such as asbestos and can be preferably an animal or vegetable natural fiber. The chemical fiber includes a refined fiber such as Lyocell, a regenerated fiber such as rayon (including viscose rayon), a semisynthetic fiber such as acetate, a synthetic fiber such as a polyamide type (including nylon and aramid), a polyvinyl alcohol type, a polyvinyl chloride type, a polyester type, a polyacrylonitrile type, a polyolefin type (including polyethylene and polypropylene), a polyether ester type, and a polyurethane type, and an inorganic fiber such as a glass fiber and a carbon fiber, and is preferably a refined fiber, a semisynthetic fiber, or a synthetic fiber. The material of the fibrous substrate may be a mixture of two or more materials selected from the group consisting of the fiber materials illustrated by these (for example, the material of the fibrous substrate may be a mixture of any natural fiber and any synthetic fiber and may be in the form of a mixed fiber, a composite fiber, a blended yarn, a blended weaving yarn, or the like).

The water- and oil-repellent agent of the present disclosure can impart water- and oil-repellency and alcohol-repellency to either of a hydrophilic fiber material and a hydrophobic fiber material. Examples of the hydrophilic fiber material include a cellulose type (cotton, rayon, or the like). Examples of the hydrophobic fiber material include a polyolefin type (polyethylene, polypropylene, a polyethylene blend, and the like), a polyvinyl chloride type, a polyamide type (nylon and the like), a polyester type, and a polystyrene type.

Especially, the water- and oil-repellent agent of the present disclosure can be applied to a fibrous substrate of a nonwoven fabric in order to produce a textile product for which high alcohol-repellency is required, including, but not limited to, a nonwoven fabric product such as a medical nonwoven fabric that can be utilized for a medical gown, scrubs, and the like. The medical nonwoven fabric can be typically a nonwoven fabric composed of a hydrophobic fiber material as described above and can be, for example, a polypropylene nonwoven fabric, a composite nonwoven fabric of polypropylene and polyethylene, or a polyethylene nonwoven fabric.

Alternatively, the fibrous substrate may be leather. The water- and oil-repellent agent may be applied in the form of an aqueous solution or an aqueous emulsion to leather at various stages of leather processing, for example, during the period of leather wetting processing or during the period of leather finishing, in order to make the leather hydrophobic and oleophobic.

Alternatively, the fibrous substrate may be paper. The water- and oil-repellent agent may be applied to previously formed paper or may be applied at various stages of papermaking, for example, during a paper drying period.

Embodiments has been described above, and it will be understood that various changes in form and detail can be made without departing from the spirit and scope of the claims.

Examples

The water- and oil-repellent agent and the method for producing the same according to the present disclosure will be specifically described below by giving Examples, but are not limited to these Examples. "Parts" and "%" are "parts by mass" and "% by mass" unless otherwise specified.

The test methods used below are as follows:

[Processing Stability]

A water- and oil-repellent agent in the form of an aqueous dispersion was diluted to 1% with tap water, and the obtained dilute liquid was stirred at 3,000 rpm with a homomixer for 10 minutes (a strong shear force was provided). Then, this dilute liquid was filtered through a black cotton fabric. Due to the provision of the strong shear force, scum (a broken material of the emulsion) can be generated, and the scum can be separated on the cotton fabric. As shown in the following calculation formula, the mass of this scum was obtained by subtracting the measured value of the post-drying mass (g) of the black cotton fabric before the filtration from the measured value of the post-drying mass (g) of the black cotton fabric after the filtration (the mass of the black cotton fabric after the filtration includes the mass of the scum separated thereon), and the scum ratio (%) was calculated as the mass of the scum to the post-drying mass of the black cotton fabric before the filtration. When the scum ratio is lower, particularly less than 10% as shown in the following criteria, the processing stability is higher.

$$\text{scum ratio (\%)} = (M - M_0)/M_0*100$$

wherein $M_0$ and M are as follows:

Mo = the post-drying mass (g) of the black cotton fabric before the filtration
M = the post-drying mass (g) of the black cotton fabric after the filtration
scum ratio = 0%: There is no scum at all.
scum ratio <10%: There is a little scum.
scum ratio ≥10%: There is much scum.

[Alcohol-Repellency]

A water- and oil-repellent agent in the form of an aqueous dispersion was diluted with pure water so that the solid content was 0.3% by mass, thereby preparing a treatment liquid (1,000 g). In this test, the fabric (fibrous substrate) to be treated was a polypropylene nonwoven fabric (45 g/m$^2$). One polypropylene nonwoven fabric (45 g/m$^2$) (510 mm x 205 mm) was dipped in this treatment liquid, passed between mangle rolls, and treated by a pin tenter at 120°C for 2 minutes.

For the thus obtained test fabric (treated fabric), alcohol-repellency was evaluated. Specifically, the test fabric was tested and evaluated as follows in accordance with AATCC Test Method 193-2007.

The treated fabric is kept in a constant temperature and humidity chamber at a temperature of 21°C and a humidity of 50% for 4 hours or more. Test liquids (isopropyl alcohol (IPA), water, and mixed liquids thereof, shown in Table 2) are also stored at a temperature of 21°C. The test is performed in a constant temperature and humidity chamber at a temperature of 21°C and a humidity of 50%. Five drops of a test liquid each in an amount of 50 μL are gently dropped on the test fabric by a micropipette, and the test fabric is allowed to stand for 30 s. Then, when four or five liquid drops remains on the test fabric, the test fabric is considered to pass the test with the test liquid. The alcohol-repellency is evaluated by 12 grades, Fail, 0, 1, 2, 3, 4, 5, 6, 7, 8, 9, and 10, from poor to good levels of water-repellency, according to the point of the alcohol-repellency in terms of the maximum of the isopropyl alcohol (IPA) content (% by volume) of the test liquids in the tests passed by the test fabric. When the grade number is larger, the alcohol-repellency is higher.

[Table 2]

|  | Composition (% by volume) | |
| --- | --- | --- |
| Grade | Isopropyl alcohol | Water |
| 10 | 100 | 0 |
| 9 | 90 | 10 |
| 8 | 80 | 20 |
| 7 | 70 | 30 |
| 6 | 60 | 40 |
| 5 | 50 | 50 |
| 4 | 40 | 60 |
| 3 | 30 | 70 |
| 2 | 20 | 80 |
| 1 | 10 | 90 |
| 0 | 0 | 100 |
| Fail | Inferior to case where isopropyl alcohol/water is 0/100 | |

Example 1

61 g of $F(CF_2)_6CH_2CH_2OCOC(CH_3)=CH_2$ (C6SFMA), 11 g of isononyl methacrylate, 1 g of lauryl acrylate (C12Ac), 160 g of pure water, 25 g of tripropylene glycol, 7.5 g of polyoxyethylene oleyl ether, and 2.0 g of polyoxyethylene isotridecyl ether were charged in a 500 mL autoclave and ultrasonically emulsified and dispersed under stirring at 60°C for 15 minutes. A flask was purged with nitrogen. Then 25 g of vinyl chloride (VC1) was injected and filled, and 0.4 g of 2,2-azobis(2-amidinopropane) dihydrochloride was added. The mixture was reacted at 60°C for 5 hours to obtain an aqueous dispersion of a polymer.
The composition of the monomers fed (monomer mass ratio) is as shown in Table 3, and the monomer composition in the polymer substantially matched the composition of the monomers fed (the same applies to the following Examples and Comparative Examples).

Example 2

An aqueous dispersion of a polymer was obtained in the same manner as Example 1 except that isononyl acrylate was used instead of isononyl methacrylate.

Example 3

69 g of $F(CF_2)_6CH_2CH_2OCOC(CH_3)=CH_2$ (C6SFMA), 2 g of isononyl methacrylate, 10 g of stearyl acrylate (C18Ac), 2 g of diacetone acrylamide, 1 g of N-isopropylacrylamide (N-IPAM), 3 g of glycerol monomethacrylate (GLM), 180 g of pure water, 25 g of tripropylene glycol, 7.5 g of polyoxyethylene oleyl ether, and 2.0 g of polyoxyethylene isotridecyl ether were charged in a 500 mL autoclave and ultrasonically emulsified and dispersed under stirring at 60°C for 15 minutes. A flask was purged with nitrogen. Then 0.6 g of 2,2-azobis[2-(2-imidazolin-2-yl)propane] dihydrochloride was added, and the mixture was reacted at 60°C for 1 hour (polymerization reaction: completion 90% based on the total moles of the first monomer raw material). Then, 25 g of vinyl chloride (VC1) was injected and filled. Further 0.6 g of 2,2-azobis(2-amidinopropane) dihydrochloride was added, and the mixture was reacted at 60°C for 5 hours to obtain an aqueous dispersion of a polymer.

Example 4

An aqueous dispersion of a polymer was obtained in the same manner as Example 3 except that the amount of N-isopropylacrylamide (N-IPAM) was changed to 3 g.

Comparative Example 1

69 g of $F(CF_2)_6CH_2CH_2OCOC(CH_3)=CH_2$ (C6SFMA), 10 g of stearyl acrylate (C18Ac), 3 g of N-isopropylacrylamide (N-IPAM), 3 g of glycerol monomethacrylate (GLM), 160 g of pure water, 24 g of tripropylene glycol, 7.5 g of polyoxyethylene oleyl ether, and 2.0 g polyoxyethylene isotridecyl ether were charged in a 500 mL autoclave and ultrasonically emulsified and dispersed under stirring at 60°C for 15 minutes. A flask was purged with nitrogen. Then 25 g of vinyl chloride (VC1) was injected and filled, and 0.4 g of 2,2-azobis(2-amidinopropane) dihydrochloride was added. The mixture was reacted at 60°C for 5 hours to obtain an aqueous dispersion of a polymer.

Comparative Example 2

61 g of $F(CF_2)_6CH_2CH_2OCOC(CH_3)=CH_2$ (C6SFMA), 11 g of stearyl acrylate (C18Ac), 1 g of lauryl acrylate (C12Ac), 160 g of pure water, 24 g of tripropylene glycol, 7.5 g of polyoxyethylene oleyl ether, and 2.0 g of polyoxyethylene isotridecyl ether were charged in a 500 mL autoclave and ultrasonically emulsified and dispersed under stirring at 60°C for 15 minutes. A flask was purged with nitrogen. Then 25 g of vinyl chloride (VCI) was injected and filled, and 0.4 g of 2,2-azobis(2-amidinopropane) dihydrochloride was added. The mixture was reacted at 60°C for 5 hours to obtain an aqueous dispersion of a polymer.

Comparative Example 3

61 g of $F(CF_2)_6CH_2CH_2OCOC(CH_3)=CH_2$ (C6SFMA), 11 g of benzyl methacrylate, 1 g of lauryl acrylate (C12Ac), 160 g of pure water, 24 g of tripropylene glycol, 7.5 g of polyoxyethylene oleyl ether, and 2.0 g of polyoxyethylene isotridecyl ether were charged in a 500 mL autoclave and ultrasonically emulsified and dispersed under stirring at 60°C for 15 minutes. A flask was purged with nitrogen. Then 25 g of vinyl chloride (VC1) was injected and filled, and 0.4 g of 2,2-azobis(2-amidinopropane) dihydrochloride was added. The mixture was reacted at 60°C for 5 hours to obtain an aqueous dispersion of a polymer.

Comparative Example 4

61 g of $F(CF_2)_6CH_2CH_2OCOC(CH_3)=CH_2$ (C6SFMA), 11 g of cyclohexyl methacrylate, 1 g of lauryl acrylate (C12Ac), 160 g of pure water, 24 g of tripropylene glycol, 7.5 g of polyoxyethylene oleyl ether, and 2.0 g of polyoxyethylene isotridecyl ether were charged in a 500 mL autoclave and ultrasonically emulsified and dispersed under stirring at 60°C for 15 minutes. A flask was purged with nitrogen. Then 25 g of vinyl chloride (VC1) was injected and filled, and 0.4 g of 2,2-azobis(2-amidinopropane) dihydrochloride was added. The mixture was reacted at 60°C for 5 hours to obtain an aqueous dispersion of a polymer.

Comparative Example 5

61 g of $F(CF_2)_6CH_2CH_2OCOC(CH_3)=CH_2$ (C6SFMA), 11 g of octyl acrylate, 1 g of lauryl acrylate (C12Ac), 160 g of pure water, 24 g of tripropylene glycol, 7.5 g of polyoxyethylene oleyl ether, and 2.0 g of polyoxyethylene isotridecyl ether were charged in a 500 mL autoclave and ultrasonically emulsified and dispersed under stirring at 60°C for 15 minutes. A flask was purged with nitrogen. Then 25 g of vinyl chloride (VC1) was injected and filled, and 0.4 g of 2,2-azobis(2-amidinopropane) dihydrochloride was added. The mixture was reacted at 60°C for 5 hours to obtain an aqueous dispersion of a polymer.

Comparative Example 6

60 g of $F(CF_2)_6CH_2CH_2OCOC(CH_3)=CH_2$ (C6SFMA), 10 g of butyl methacrylate, 124.4 g of pure water, 30 g of dipropylene glycol, 0.9 g of an ethylene oxide propione oxide polymer (Pronon 204 manufactured by NOF CORPORATION), 0.9 g of a coconut oil fatty acid amidopropyl betaine liquid (AM-3130N manufactured by NIPPON SURFACTANT INDUSTRIES CO., LTD.), 3 g of polyoxyoleyl ether (E-430 manufactured by Kao Corporation), 30 g of dipropylene glycol (DPG), and 1 g of n-dodecyl mercaptan were charged in a 500 mL autoclave, heated at 60°C for 60 minutes, and then' ultrasonically emulsified and dispersed under stirring at 60°C for 15 minutes. A flask was purged with nitrogen. Then 28 g of vinyl chloride (VCI) was injected and filled, and 0.4 g of 2,2-azobis[2-(2-imidazolin-2-yl)propane] was added. The mixture was reacted at 60°C for 10 hours to obtain an aqueous dispersion of a polymer.

For each of the aqueous dispersions obtained by the above-mentioned Examples 1 to 4 and Comparative Examples 1 to 6, the processing stability (scum ratio) and the alcohol-repellency were evaluated. The results of these are shown together in Table 3.

In the table, the meanings of the abbreviations are as follows:

C6SFMA:      $F(CF_2)_6CH_2CH_2OCOC(CH_3)=CH_2$
C18Ac:       Stearyl acrylate
C12Ac:       Lauryl acrylate
BuMAc:       Butyl methacrylate
N-IPAM:      N-Isopropylacrylamide
GLM:         Glycerol monomethacrylate
VCl:         Vinyl chloride

[Table 3]

| | | | Ex. 1 | Ex. 2 | Ex. 3 | Ex. 4 | Com. Ex. 1 | Com. Ex. 2 | Com. Ex. 3 | Com. Ex. 4 | Com. Ex. 5 | Com. Ex. 6 |
|---|---|---|---|---|---|---|---|---|---|---|---|---|
| First monomer raw materials (parts) | Monomer (a) | C6SFMA | 61 | 61 | 69 | 69 | 69 | 61 | 61 | 61 | 61 | 60 |
| | Monomer (b) | Isononyl acrylate | | 11 | | | | | | | | |
| | | Isononyl methacrylate | 11 | | 2 | 2 | | | | | | |
| | Monomer (c) | C18Ac | | | 10 | 10 | 10 | 11 | | | | |
| | | BuMAc | | | | | | | | | | 10 |
| | | Benzyl methacrylate | | | | | | | 11 | | | |
| | | Cyclohexyl methacrylate | | | | | | | | 11 | | |
| | | Octyl acrylate | | | | | | | | | 11 | |
| | | C12Ac | 1 | 1 | | | | 1 | 1 | 1 | 1 | |
| | Monomer (d) | Diacetone acrylamide | | | 2 | 2 | | | | | | |
| | | N-IPAM | | | 1 | 3 | 3 | | | | | |
| | | GLM | | | 3 | 3 | 3 | | | | | |
| | Monomer (e) | VCI | 25 | 25 | | | 25 | 25 | 25 | 25 | 25 | 28 |
| Second monomer raw materials (parts) | Monomer (e) | VCI | | | 25 | 25 | | | | | | |
| Evaluation | | Processing stability Scum ratio(%) | 0 | 6 | 4 | 8 | 15 | 10 | 0 | 4 | 15 | 9 |
| | | Alcohol-repellency (grade) | 8 | 7 | 8 | 8 | 8 | 9 | 5 | 3 | 7 | 6 |

EP 3 792 328 A1

As understood from Table 3, in Examples 1 to 4, the scum ratio was less than 10%, which means that high processing stability was obtained, and a high alcohol-repellency of grade 7 or more was obtained. On the other hand, in Comparative Examples 1 to 7, at least either of low processing stability with a scum ratio of 10% or more and a low alcohol-repellency of grade 6 or less was provided, and both high processing stability and high alcohol-repellency were not achieved.

Industrial Applicability

The water- and oil-repellent agent of the present disclosure can be utilized for treating a variety of substrates to impart water- and oil-repellency. Particularly, the water- and oil-repellent agent of the present disclosure can be utilized for a substrate for which the provision of high alcohol-repellency is required, including, but not limited to, a fibrous substrate such as a medical nonwoven fabric.

**Claims**

1. A water- and oil-repellent agent comprising a fluorine-containing copolymer comprising repeating units derived from:

    (a) a fluorine-containing monomer represented by the general formula:

    $$CH_2=C(-X)-C(=O)-Y-Z-Rf \qquad (1)$$

    wherein X is a hydrogen atom, a monovalent organic group, or a halogen atom;
    Y is -O- or -NH- ;
    Z is a direct bond or a divalent organic group; and
    Rf is a fluoroalkyl group having 1 to 20 carbon atoms, and

    (b) nonyl (meth)acrylate.

2. The water- and oil-repellent agent according to claim 1, wherein in general formula (1), X is a hydrogen atom, a linear or branched alkyl group having 1 to 21 carbon atoms, a fluorine atom, a chlorine atom, a bromine atom, an iodine atom, a $CFX^1X^2$ group (wherein $X^1$ and $X^2$ are each a hydrogen atom, a fluorine atom, a chlorine atom, a bromine atom, or an iodine atom), a cyano group, a linear or branched fluoroalkyl group having 1 to 21 carbon atoms, a substituted or unsubstituted benzyl group, or a substituted or unsubstituted phenyl group.

3. The water- and oil-repellent agent according to claim 1 or 2, wherein in general formula (1), Z is a direct bond, an aliphatic group having 1 to 10 carbon atoms, an aromatic group or a cycloaliphatic group having 6 to 18 carbon atoms, a $-CH_2CH_2N(R^1)SO_2-$ group wherein $R^1$ is an alkyl group having 1 to 4 carbon atoms, a $-CH_2CH(OZ^1)CH_2-$ group wherein $Z^1$ is a hydrogen atom or an acetyl group, or a $-(CH_2)_m-SO_2-(CH_2)_n-$ group or a $-(CH_2)_m-S-(CH_2)_n-$ group wherein m is 1 to 10, and n is 0 to 10.

4. The water- and oil-repellent agent according to any of claims 1 to 3, wherein in general formula (1), Rf is a fluoroalkyl group having 1 to 6 carbon atoms.

5. The water- and oil-repellent agent according to any of claims 1 to 4, wherein the nonyl (meth)acrylate (b) is isononyl (meth)acrylate.

6. The water- and oil-repellent agent according to any of claims 1 to 5, wherein the fluorine-containing copolymer further comprises at least one repeating unit derived from at least one selected from the group consisting of

    (c) a fluorine-free non-crosslinkable monomer excluding the nonyl (meth)acrylate (b),
    (d) a fluorine-free crosslinkable monomer, and
    (e) a halogenated olefin monomer.

7. The water- and oil-repellent agent according to any of claims 1 to 6, which comprises a fluorine-containing composite polymer comprising:

a first polymer which is the fluorine-containing copolymer, and
a second polymer which is another polymer containing a repeating unit derived from (e) a halogenated olefin monomer.

8. The water- and oil-repellent agent according to claim 6 or 7, wherein the halogenated olefin monomer (e) is an olefin having 2 to 20 carbon atoms and substituted by 1 to 10 chlorine atoms, bromine atoms, or iodine atoms.

9. The water- and oil-repellent agent according to any of claims 6 to 8, wherein the halogenated olefin monomer (e) is vinyl chloride, vinyl bromide, vinyl iodide, vinylidene chloride, vinylidene bromide, or vinylidene iodide.

10. The water- and oil-repellent agent according to any of claims 1 to 9, which further comprises an aqueous medium.

11. The water- and oil-repellent agent according to any of claims 1 to 10, wherein
a proportion of the monomer (a) is 20 to 90% by mass,
a proportion of the monomer (b) is 0.1 to 70% by mass,
a proportion of the monomer (c) is 0.5 to 50% by mass,
a proportion of the monomer (d) is 0.5 to 50% by mass, and
a proportion of the monomer (e) is 0.5 to 50% by mass,
based on 100% by mass of the fluorine-containing copolymer or the fluorine-containing composite polymer, and
a concentration of the fluorine-containing copolymer or the fluorine-containing composite polymer in the water- and oil-repellent agent is 0.01 to 50% by mass.

12. A textile product comprising a fibrous substrate treated with the water- and oil-repellent agent according to any of claims 1 to 11.

13. The textile product according to claim 12, wherein the fibrous substrate is a nonwoven fabric.

## INTERNATIONAL SEARCH REPORT

| International application No. |
|---|
| PCT/JP2019/015926 |

A. CLASSIFICATION OF SUBJECT MATTER
Int.Cl. C09K3/18(2006.01)i, C08F220/22(2006.01)i, C08F220/54(2006.01)i,
D06M15/244(2006.01)i, D06M15/277(2006.01)i

According to International Patent Classification (IPC) or to both national classification and IPC

B. FIELDS SEARCHED

Minimum documentation searched (classification system followed by classification symbols)
Int.Cl. C09K3/18, C08F220/22, C08F220/54, D06M15/244, D06M15/277

Documentation searched other than minimum documentation to the extent that such documents are included in the fields searched
Published examined utility model applications of Japan       1922-1996
Published unexamined utility model applications of Japan     1971-2019
Registered utility model specifications of Japan             1996-2019
Published registered utility model applications of Japan     1994-2019

Electronic data base consulted during the international search (name of data base and, where practicable, search terms used)
WPIDS/WPIX(STN)

C. DOCUMENTS CONSIDERED TO BE RELEVANT

| Category* | Citation of document, with indication, where appropriate, of the relevant passages | Relevant to claim No. |
|---|---|---|
| Y | JP 2015-120895 A (DAIKIN INDUSTRIES, LTD.) 02 July 2015, paragraphs [0050]-[0056], [0064]-[0067], [0103] & WO 2015/076348 A1 & CN 105765025 A & KR 10-2016-0076527 A | 1-13 |
| Y | WO 2009/104728 A1 (DAIKIN INDUSTRIES, LTD.) 27 August 2009, synthesis example 12, example 6 & KR 10-2010-0115811 A & CN 101952386 A | 1-13 |

☒ Further documents are listed in the continuation of Box C.        ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 07.06.2019 | 18.06.2019 |

| Name and mailing address of the ISA/ | Authorized officer |
|---|---|
| Japan Patent Office 3-4-3, Kasumigaseki, Chiyoda-ku, Tokyo 100-8915, Japan | Telephone No. |

Form PCT/ISA/210 (second sheet) (January 2015)

EP 3 792 328 A1

**INTERNATIONAL SEARCH REPORT**

International application No.

PCT/JP2019/015926

C (Continuation). DOCUMENTS CONSIDERED TO BE RELEVANT

| Category* | Citation of document, with indication, where appropriate, of the relevant passages | Relevant to claim No. |
|---|---|---|
| Y | WO 2009/148029 A1 (ASAHI GLASS CO., LTD.) 10 December 2009, paragraph [0026]<br>& US 2011/0077349 A1, paragraph [0043] & EP 2295479 A1 & CN 102046673 A & KR 10-2011-0033113 A | 1-13 |
| Y | JP 2004-506784 A (3M INNOVATIVE PROPERTIES COMPANY) 04 March 2004, paragraph [0027]<br>& US 2002/0042470 A1, paragraph [0042] & WO 2002/016306 A2 & EP 1311637 A2 & KR 10-0807896 B1 | 1-13 |
| Y | JP 5-262948 A (MINNESOTA MINING AND MANUFACTURING COMPANY) 12 October 1993, paragraph [0022]<br>& US 5284902 A, column 4, lines 1-12 | 1-13 |

Form PCT/ISA/210 (continuation of second sheet) (January 2015)

24

**EP 3 792 328 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2012020735 A

- JP 2013082886 A